# EUROPÄISCHE PATENTSCHRIFT

(11) **EP 2 570 476 B1**
(45) Veröffentlichungstag und Bekanntmachung des Hinweises auf die Patenterteilung: **12.03.2014**
(21) Anmeldenummer: 12006230.2
(22) Anmeldetag: 04.09.2012
(51) Int. Cl.: C12C 13/00, C12C 13/10

(54) **Vorrichtung zum Brauen von Bier**
Device for brewing beer
Dispositif de brassage de bière

(30) Priorität: 15.09.2011 DE 102011113350
(43) Veröffentlichungstag der Anmeldung: 20.03.2013
(73) Patentinhaber: Würtz, Renate, 74391 Erligheim (DE); Frick, Hans-Adolf, 74391 Erligheim (DE)
(72) Erfinder: Würtz, Robert, 74391 Erligheim (DE); Frick, Hans-Adolf, 74391 Erligheim (DE)
(74) Vertreter: Schmid, Barbara

(56) Entgegenhaltungen:
- DE-A1-102004 054 272
- DE-A1-102009 032 648
- DE-C1- 19 905 107
- DE-U1- 8 518 853

## Beschreibung

### TECHNISCHES GEBIET

Die Erfindung betrifft eine Vorrichtung zum Brauen von Bier, die sowohl für haushaltsübliche Mengen als auch für großtechnische Anlagen eingesetzt werden kann. Zum Brauen von Bier werden Wasser, Malz und Hopfen unter Rühren über verschiedene Temperaturstufen zur Bierwürze verarbeitet. Diese wird anschließend von festen Bestandteilen getrennt (Läutervorgang). Nach dem erfolgreichen Brauvorgang muss die Bierwürze gekühlt werden.

### STAND DER TECHNIK

Die im Stand der Technik bekannten Vorrichtungen zum Brauen von Bier weisen in der Regel ein Malzrohr für die Herstellung der Bierwürze auf. Sollen verschiedene Rezepturen getestet werden, sind großtechnische Vorrichtungen oftmals nicht geeignet, da das Malzrohr ein zu großes Volumen aufweist, so dass nur große Mengen an Bier gebraut werden können. Ist das Volumen des Malzrohres dagegen verhältnismäßig klein, können auch nur geringe Mengen an Bier - beispielsweise in haushaltsüblichen Mengen oder für Testversuche - gebraut werden. Kommerzielle Bierbrauer benötigen daher in der Regel mehrere Vorrichtungen, von denen zumindest eine ein kleines Malzrohr für Testversuche aufweisen sollte. Gerade für kleinere Brauereien stellt dies einen hohen Kostenfaktor dar, da mehrere Vorrichtungen angeschafft und gewartet werden müssen. Darüber hinaus steigt der diesbezügliche Platzbedarf mit jeder benötigten Vorrichtung.

Die in DE 19905107 C1 beschriebene Vorrichtung bietet die Möglichkeit, parallel zwei verschiedene Biere oder die doppelte Menge zu Brauen.

### DARSTELLUNG DER ERFINDUNG

Ausgehend von diesem vorbekannten Stand der Technik liegt der Erfindung die Aufgabe zugrunde, eine verbesserte Vorrichtung zum Brauen von Bier anzugeben, die möglichst universell eingesetzt werden kann.

Die erfindungsgemäße Vorrichtung ist durch die Merkmale des Patentanspruchs 1 gegeben. Sinnvolle Weiterbildungen der Erfindung sind Gegenstand von sich an den Patentanspruch 1 anschließenden weiteren Ansprüchen.

Die erfindungsgemäße Vorrichtung zum Brauen von Bier besitzt ein Rohrleitungssystem mit einer Pumpe. In dem Rohrleitungssystem ist zumindest ein Malzrohr angeordnet, das von unten nach oben mit Flüssigkeit durchströmt werden kann. Das Malzrohr kann beheizt und gekühlt werden. Darüber hinaus ist in dem Rohrleitungssystem zumindest ein weiteres Behältnis vorhanden, das von oben nach unten mit Flüssigkeit durchströmt werden kann. Erfindungsgemäß ist vorgesehen, dass das Malzrohr teleskopierbar ausgebildet ist, so dass das Innenvolumen des Malzrohres variiert werden kann.

Auf diese Weise kann die erfindungsgemäße Vorrichtung sowohl für die großtechnische Herstellung von größeren Mengen an Bier verwendet werden, als auch für die Herstellung von lediglich kleineren Mengen an Bier, beispielsweise für Testversuche mit neuen Rezepturen oder für lediglich haushaltsübliche Mengen an Bier für Heimbrauer. Das Volumen des Malzrohres wird lediglich an die Menge des herzustellenden Bieres angepasst, ohne dass ein Umbau der Vorrichtung oder ein Wechsel auf eine andere Vorrichtung erforderlich wäre. Die erfindungsgemäße Vorrichtung kann somit insbesondere von kleineren Brauereien wirtschaftlich vorteilhaft eingesetzt werden, da eine einzige Vorrichtung für verschiedene Anwendungen eingesetzt werden kann. So können mit dem erfindungsgemäßen Malzrohr beispielsweise 30 Liter Bier, 50 Liter Bier oder 100 Liter Bier hergestellt werden.

Die Vorrichtung kann vorzugsweise mehrere Malzrohre aufweisen, die parallel zueinander geschaltet werden können. Dabei müssen nicht alle Malzrohre mit einem variablen Innenvolumen ausgestattet sein, vielmehr kann es ausreichend sein, lediglich das erste Malzrohr teleskopierbar auszubilden. Sollen lediglich geringe Mengen an Bier gebraut werden, wird das Rohrleitungssystem so gesteuert, dass ausschließlich das teleskopierbare erste Malzrohr verwendet wird. Sollen dagegen große Mengen an Bier gebraut werden, können entsprechend viele weitere Malzrohre dazugeschaltet werden. Durch den Einbau eines teleskopierbaren erfindungsgemäßen Malzrohres kann somit auch eine großtechnische Anlage für die Herstellung von sehr großen Mengen an Bier einfach umgerüstet werden, so dass diese auch für Testzwecke eingesetzt werden kann.

Die Heizung des Malzrohres kann vorzugsweise über Induktion erfolgen. Dies hat den Vorteil, dass nur das tatsächlich verwendete Volumen geheizt werden muss, was eine Energieersparnis mit sich bringt. Auf diese Weise können noch kleinere Mengen an Bier wirtschaftlich gebraut werden.

Neben dem Malzrohr kann auch das beheizbare Behältnis, in dem das fertige Bier aufgefangen wird, teleskopierbar ausgebildet sein. Die Lagerung des fertigen Bieres kann auf diese Weise auch für die Zeit der weiteren Gärung platzsparend erfolgen, ohne dass eine große Anzahl an Behältnissen in unterschiedlicher Größe vorrätig gehalten werden müsste.

Bei der Pumpe in dem Rohrleitungssystem kann es sich in vorteilhafter Weise um eine Membranpumpe handeln. Während herkömmliche Hydraulikpumpen, beispielsweise Kreiselpumpen, einen konstanten Druck in dem Rohrleitungssystem aufbauen, kann mittels einer Membranpumpe ein variabler Druck erzeugt werden. Dadurch bewegt sich der Filterkuchen während des Brau- und Läutervorgangs in dem Malzrohr beständig auf und ab, so dass dieser nicht zu fest zusammengepresst wird und ein gutes Filterergebnis erzielt werden kann.

Auch sind Hydraulikpumpen anfällig für Verstopfungen, so dass die Pumpe immer wieder abgeschaltet und gereinigt werden muss, was den Brau- und Läutervorgang entsprechend verlängert und wirtschaftlich ungünstig macht. Membranpumpen dagegen sind deutlich weniger anfällig für Verstopfungen. Da die Membranpumpen darüber hinaus selbstansaugend sind, können sie an einer beliebigen Stelle in dem Rohrleitungssystem eingebaut werden, beispielsweise auch oberhalb des Bierbehältnisses. Hydraulikpumpen dagegen müssen jeweils am tiefsten Punkt des Rohrleitungssystems eingebaut werden.

Das Malzrohr kann in einer bevorzugten Ausführungsform mit einem nach unten gebogenen Druckblech ausgestattet sein, das mehrere Durchbrüche aufweist. Die Form der Durchbrüche kann variieren, wobei kreisförmige oder schlitzartige Durchbrüche wegen der einfachen Herstellbarkeit entsprechender Durchbrüche bevorzugt sind. Das Druckblech kann in diesem Fall verhindern, dass sich der Treber, der während des Klärvorgangs als Filterkuchen verwendet werden kann, im Mündungsbereich des Rohrleitungssystems in dem Innenraum des Malzrohres festsetzen kann und das Rohrleitungssystem auf diese Weise verstopfen kann. Darüber hinaus reduziert sich durch die Verwendung des Druckbleches die Gefahr, dass kleine Partikel des Filterkuchens in das Rohrleitungssystem gelangen und auf diese Weise in die Pumpe geraten, was zu Verstopfungen der Hydraulikpumpe führen kann. Dieses Problem kann bei Membranpumpen nicht auftauchen.

Weitere Vorteile und Merkmale der Erfindung sind den in den Ansprüchen ferner angegebenen Merkmalen sowie dem nachstehenden Ausführungsbeispiel zu entnehmen.

### KURZE BESCHREIBUNG DER ZEICHNUNG

Die Erfindung wird im Folgenden anhand des in der Zeichnung dargestellten Ausführungsbeispiels näher beschrieben und erläutert. Es zeigt:

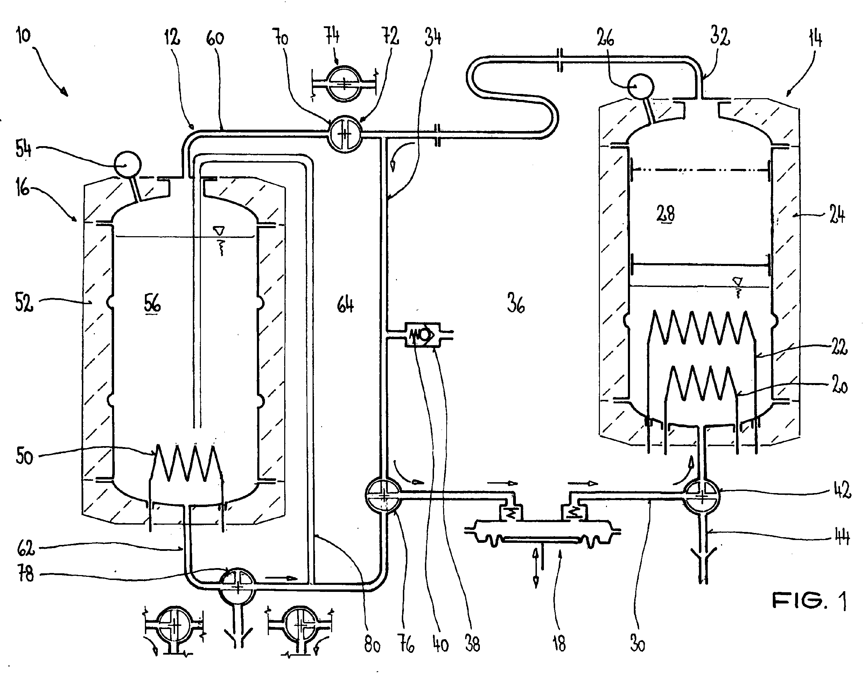

- Fig. 1: eine schematische Darstellung der erfindungsgemäßen Vorrichtung zum Brauen von Bier.

### WEGE ZUM AUSFÜHREN DER ERFINDUNG

Die erfindungsgemäße Vorrichtung 10 zum Brauen von Bier besitzt ein Rohrleitungssystem 12, in dem ein Malzrohr 14, ein Bierbehältnis 16 und eine Membranpumpe 18 vorhanden sind.

Das Malzrohr 14 ist teleskopierbar ausgebildet, so dass das Innenvolumen des Malzrohres 14 an die zu brauende Menge an Bier angepasst werden kann. Das Malzrohr 14 ist im vorliegenden Beispielsfall mit einer Heizspirale 20 und mit einer Kühlspirale 22 versehen. Darüber hinaus ist im vorliegenden Fall eine Isolierung 24 außen an dem Malzrohr 14 vorhanden. In die Isolierung 24 kann auch eine Induktionsheizung installiert werden. Im vorliegenden Beispielsfall ist das Malzrohr 14 mit einer Temperatur- und Druckanzeige 26 ausgestattet, mittels derer der im Innenraum 28 des Malzrohres 14 herrschende Druck sowie die Temperatur im Innenraum 28 des Malzrohres 14 abgelesen werden kann.

In das Malzrohr 14 mündet ein erster Rohrabschnitt 30 des Rohrleitungssystems 12 von unten ein, so dass von der Membranpumpe 18 Flüssigkeit von unten in den Innenraum 28 des Malzrohres 14 gepumpt werden kann. Ein zweiter Rohrabschnitt 32 des Rohrleitungssystems 12 mündet oben in das Malzrohr 14, so dass Flüssigkeit oben aus dem Malzrohr 14 überlaufen und in den zweiten Rohrabschnitt 32 laufen kann. Die Rohrabschnitte 30 und 32 bilden zusammen mit einem dritten Rohrabschnitt 34 einen ersten Flüssigkeitskreislauf 36. In dem dritten Rohrabschnitt 34 befindet sich ein Befüllventil 38, das im vorliegenden Beispielsfall mit einer Rückschlagklappe 40 ausgestattet ist.

Um die im Malzrohr 14 vorhandene Flüssigkeit bei Bedarf - beispielsweise im Fall einer Wartung oder einer Reinigung der Vorrichtung - vollständig ablassen zu können, weist der unten in das Malzrohr führende erste Rohrabschnitt 30 einen Dreiwegehahn 42 auf. Während des Bierbrauens ist dieser Dreiwegehahn 42 in der in der Zeichnung dargestellten Position vorhanden, so dass Flüssigkeit von der Membranpumpe 18 in das Malzrohr 14 gepumpt wird. Im Fall der Reinigung wird der Dreiwegehahn 42 dagegen - bezogen auf Fig. 1 - um 90 Grad im Uhrzeigersinn gedreht, so dass die Flüssigkeit aus dem Malzrohr 14 nach unten in den Rohrstutzen 44 ablaufen kann.

Das Bierbehältnis 16 weist eine Heizspirale 50 und im vorliegenden Beispielsfall ebenfalls eine Isolierung 52 auf. In die Isolierung 24 kann auch eine Induktionsheizung installiert werden. Darüber hinaus ist im vorliegenden Beispielsfall ebenfalls eine Temperatur- und Druckanzeige 54 vorgesehen, mittels der der Druck im Innenraum 56 des Bierbehältnisses 16 sowie die dort herrschende Temperatur abgelesen werden kann.

In das Bierbehältnis 16 mündet von oben ein vierter Rohrabschnitt 60 des Rohrleitungssystems 12, so dass von der Membranpumpe 18 Flüssigkeit von oben in das Bierbehältnis 16 gepumpt werden kann. Ein fünfter Rohrabschnitt 62 des Rohrleitungssystems 12 mündet von unten in das Bierbehältnis 16, so dass Flüssigkeit von unten aus dem Bierbehältnis 16 abgesaugt werden kann. Die Rohrabschnitte 60 und 62 bilden gemeinsam mit dem dritten Rohrabschnitt 34 einen zweiten Flüssigkeitskreislauf 64.

In dem vierten Rohrabschnitt 60 befindet sich ein Absperrventil 70. Mittels dieses Absperrventils 70 kann gesteuert werden, ob Flüssigkeit von der Membranpumpe 18 auch durch den zweiten Flüssigkeitskreislauf 64 gepumpt wird oder nicht. Befindet sich das Absperrventil 70 in sein in der Zeichnung dargestellten ZU-Stellung 72, wird die Flüssigkeit in dem Rohrleitungssystem 12 von der Membranpumpe 18 lediglich durch den ersten Rohrabschnitt 30, das Malzrohr 14, den zweiten Rohrabschnitt 32 und den dritten Rohrabschnitt 34 gepumpt. Dies ist beispielsweise während des Anschwänzens der Fall. Befindet sich das Absperrventil 70 dagegen in seiner AUF-Stellung 74, wird die Flüssigkeit in dem Rohrleitungssystem 12 von der Membranpumpe 18 sowohl durch den ersten Flüssigkeitskreislauf 36 als auch durch den vierten Rohrabschnitt 60, das Bierbehältnis 16 und den fünften Rohrabschnitt 62 gepumpt. Die Verbindung des dritten Rohrabschnitts 34 mit dem ersten Rohrabschnitt 30 und dem fünften Rohrabschnitt 62 erfolgt über einen Dreiwegehahn 76.

In dem fünften Rohrabschnitt 62 befindet sich im vorliegenden Beispielsfall ein weiterer Dreiwegehahn 78. Dieser Dreiwegehahn 78 ist im vorliegenden Beispielsfall an der tiefsten Stelle des Rohrleitungssystems 12 angeordnet, um eine vollständige Entleerung der gesamten Vorrichtung 10 zu ermöglichen.

In das Bierbehältnis 16 ragt darüber hinaus ein sechster Rohrabschnitt 80 von oben ein. Dieser sechste Rohrabschnitt 80 ragt weit in den Innenraum 56 des Bierbehältnisses 16 ein und endet im vorliegenden Beispielsfall erst kurz oberhalb der Heizspirale 50 des Bierbehältnisses. Das andere Ende des sechsten Rohrabschnitts 80 endet hinter dem Dreiwegehahn 78 in den fünften Rohrabschnitt 62. Bei geschlossenem Dreiwegehahn 78 kann auf somit Flüssigkeit von oben aus dem Bierbehältnis 16 abgesaugt werden. Dies ist beispielsweise während des Brauvorgangs der Fall.

Im vorliegenden Beispielsfall ist die Membranpumpe 18 im ersten Rohrabschnitt 30 des Rohrleitungssystems 12 angeordnet. Im Gegensatz zu dem hier dargestellten Ausführungsbeispiel könnte die Membranpumpe 18 auch an einer beliebigen anderen Stelle im Rohrleitungssystem 12 angeordnet werden.

Um mit der erfindungsgemäßen Vorrichtung 10 Bier zu brauen, wird zunächst Malz im Malzrohr 14 vorgelegt und das Rohrleitungssystem 12 anschließend mit Wasser befüllt. Dazu befindet sich das Absperrventil 70 in seiner AUF-Stellung 74, der Dreiwegehahn 77 erlaubt lediglich eine Verbindung zwischen dem dritten Rohrabschnitt 34 und dem ersten Rohrabschnitt 30, wie es in Fig. 1 dargestellt ist. Während des Klärvorgangs wird das in dem Rohrleitungssystem 12 vorhandene Wasser von der Membranpumpe 18 durch das Rohrleitungssystem gepumpt und auf diese Weise die Bierwürze vom Malzrohr 14 in das Bierbehältnis 16 gefördert. Der in dem Malzrohr vorhandene Treber kann dabei als Filterkuchen verwendet werden. Dazu wird der Dreiwegehahn 76 periodisch geöffnet und wieder geschlossen. Anschließend wird das Rohrleitungssystem 12 für den Anschwänz-Vorgang mit frischem heißen Wasser gefüllt. Dieses wird von der Membranpumpe 18 durch das Rohrleitungssystem 12 gepumpt, wobei das Absperrventil 70 periodisch geöffnet und wieder geschlossen wird. Zur Lagerung und weiteren Gärung des Bieres kann das Bierbehältnis 16 aus dem Rohrleitungssystem 12 entfernt werden.

Im Gegensatz zu dem hier dargestellten Ausführungsbeispiel könnte das Malzrohr mit einem nach unten gebogenen Druckblech mit mehreren Durchbrüchen ausgestattet sein. Das Druckblech könnte in diesem Fall verhindern, dass der Filterkuchen während des Klärvorgangs nach oben in den zweiten Rohrabschnitt 32 gedrückt wird. Die Gefahr von Verunreinigungen der Membranpumpe 18 durch kleine Partikel des Filterkuchens kann auf diese Weise weiter verringert werden.

## Patentansprüche

1. Vorrichtung (10) zum Brauen von Bier
- mit einem eine Pumpe (18) aufweisenden Rohrleitungssystem (12),
- mit zumindest einem beheizbaren und kühlbaren Malzrohr (14), das in dem Rohrleitungssystem (12) vorhanden ist und von unten nach oben mit Flüssigkeit durchströmbar ist,
- mit zumindest einem beheizbaren Behältnis (16), das in dem Rohrleitungssystem (12) vorhanden ist und von oben nach unten mit Flüssigkeit durchströmbar ist,
- **dadurch gekennzeichnet, dass**
- das Malzrohr (14) teleskopierbar ausgebildet ist, so dass das Innenvolumen des Malzrohres (14) variierbar ist.

2. Vorrichtung nach Anspruch 1,
- **dadurch gekennzeichnet, dass**
- mehrere Malzrohre (14) in dem Rohrleitungssystem (12) vorhanden sind, die jeweils parallel zueinander geschaltet sind.

3. Vorrichtung nach Anspruch 1 oder 2,
- **dadurch gekennzeichnet, dass**
- das Behältnis teleskopierbar ausgebildet ist.

4. Vorrichtung nach einem der vorstehenden Ansprüche,
- **dadurch gekennzeichnet, dass**
- die Pumpe (18) in dem Rohrleitungssystem (12) als Membranpumpe(18) ausgebildet ist.

5. Vorrichtung nach einem der vorstehenden Ansprüche,
- **dadurch gekennzeichnet, dass**
- in dem Malzrohr (14) ein nach unten gebogenes Druckblech mit mehreren Durchbrüchen vorhanden ist.

## Claims

1. Device (10) for brewing beer,
- with a pipeline system (12) having a pump (18),
- with at least one heatable and coolable malt pipe (14) which is present in the pipeline system (12) and through which liquid can flow from the bottom upwards,
- with at least one heatable vessel (16) which is present in the pipeline system (12) and through which liquid can flow from the top downwards,
- **characterized in that**
- the malt pipe (14) is designed to be telescopic, so that the internal volume of the malt pipe (14) can be varied.

2. Device according to Claim 1,
- **characterized in that**
- a plurality of malt pipes (14) are present in the pipeline system (12), which are in each case connected in parallel to one another.

3. Device according to Claim 1 or 2,
- **characterized in that**
- the vessel is designed to be telescopic.

4. Device according to one of the preceding claims,
- **characterized in that**
- the pump (18) in the pipeline system (12) is designed as a diaphragm pump (18).

5. Device according to one of the preceding claims,
- **characterized in that**
- a downwardly bent pressure plate having a plurality of perforations is present in the malt pipe (14).

## Revendications

1. Dispositif (10) de brassage de bière,
- avec un système de tuyauteries (12) présentant une pompe (18),
- avec au moins un tuyau de malt (14) pouvant être chauffé et refroidi, qui est présent dans le système de tuyauteries (12) et à travers lequel un liquide peut s'écouler de bas en haut,
- avec au moins un récipient (16) pouvant être chauffé, qui est présent dans le système de tuyauteries (12) et à travers lequel un liquide peut s'écouler de haut en bas, **caractérisé en ce que** le tuyau de malt (14) est conçu télescopique, de sorte qu'on peut faire varier le volume intérieur du tuyau de malt (14).

2. Dispositif selon la revendication 1, **caractérisé en ce que** plusieurs tuyaux de malt (14), qui sont respectivement montés en parallèle les uns par rapport aux autres, sont présents dans le système de tuyauteries (12).

3. Dispositif selon la revendication 1 ou 2, **caractérisé en ce que** le récipient est conçu télescopique.

4. Dispositif selon l'une des revendications précédentes, **caractérisé en ce que** la pompe (18) dans le système de tuyauteries (12) est réalisée sous la forme d'une pompe à membrane (18).

5. Dispositif selon l'une des revendications précédentes, **caractérisé en ce qu'**une tôle de pression, courbée vers le bas et pourvue de plusieurs brèches, est présente dans le tuyau de malt (14).
